# EUROPEAN PATENT APPLICATION

(11) **EP 4 817 970 A1**
(43) Date of publication of application: **07.10.2026**
(21) Application number: 26163155.0
(22) Date of filing: 09.03.2026
(51) Int. Cl.: B60T 8/17, B60T 8/26, B60T 8/32, B60W 40/11

(54) **BRAKE DEVICE**

(30) Priority: 31.03.2025 JP 2025058991
(71) Applicant: HONDA MOTOR CO., LTD., Tokyo 105-8404 (JP)
(72) Inventor: KAJIYAMA, Keigo, Tokyo, 105-8404 (JP); TANI, Kazuhiko, Tokyo, 105-8404 (JP); TANAKA, Kentaro, Tokyo, 105-8404 (JP); TAKAHASHI, Shinya, Tokyo, 105-8404 (JP); OSHIMA, Hidekazu, Tokyo, 105-8404 (JP)
(74) Representative: Kiwit, Benedikt

(57) **Abstract**

The present disclosure provide a brake device (130) of a vehicle (100) comprising: an assist mechanism (6) that performs brake assist for increasing a braking force of the vehicle; a behavior detection unit (121, 123, 125) that detects a pitching behavior of the vehicle; and a control unit (7) that controls the brake assist by the assist mechanism according to the pitching behavior detected by the behavior detection unit.

## Description

### BACKGROUND OF THE INVENTION

### Field of the Invention

The present invention relates to a braking technique for controlling a brake assist mechanism for increasing a braking force of a vehicle.

### Description of the Related Art

In recent years, efforts to provide access to sustainable transportation systems in consideration of vulnerable people among traffic participants are becoming active. In order to achieve this, research and development for further improving traffic safety and convenience are focused on research and development regarding driving assistance techniques.

International Publication No. 2023/007428 describes a brake system which controls a braking force of a straddle type vehicle by using a braking mechanism (so-called reflux type modulator) including a main flow path through which a brake fluid of a master cylinder flows through a wheel cylinder, a sub flow path through which the brake fluid of the wheel cylinder is released, and a supply flow path through which the brake fluid of the master cylinder is supplied to the sub flow path. In the brake system, in a case where a situation in which a brake operation is performed by a rider is determined on the basis of a detection value of a master cylinder pressure, a driving support mode (so-called brake assist) for amplifying the braking force of the straddle type vehicle is executed. In addition, in a case where the detection value of the master cylinder pressure becomes less than a reference pressure, it is determined that the brake operation is released, and the driving support mode is ended.

In a reflux type modulator including a main flow path, a sub flow path, and a supply flow path, a situation in which the brake operation by the rider and the detection value of the master cylinder pressure do not match may occur. For example, during the execution of pressure assist, the brake fluid of the master cylinder flows into the sub flow path via the supply flow path, so that the detection value of the master cylinder pressure can be less than a value corresponding to the brake operation amount. During the operation of an anti-lock brake system (ABS), the brake fluid flows into the master cylinder side, so that the detection value of the master cylinder pressure can be greater than the value corresponding to the brake operation amount. Therefore, when the brake assist is controlled using the detection value of the master cylinder pressure as the brake operation amount of the rider, there is a possibility that the brake assist according to the intention of the rider is not appropriately performed.

### SUMMARY OF THE INVENTION

The present invention provides a technique capable of executing appropriate brake assist according to the actual brake operation amount of a rider. Furthermore, the present invention contributes to development of a sustainable transportation system.

The present invention in its first aspect provides a brake device as specified in claims 1 to 15.

Further features of the present invention will become apparent from the following description of exemplary embodiments with reference to the attached drawings.

### BRIEF DESCRIPTION OF THE DRAWINGS

Fig. 1 is a side view of a straddle type vehicle according to an embodiment;
Fig. 2 is a schematic diagram illustrating a configuration example of a brake device according to the embodiment;
Fig. 3 is a diagram illustrating a normal operation state of an assist mechanism according to the embodiment;
Fig. 4 is a diagram illustrating an operation state during pressure assist in the assist mechanism according to the embodiment;
Fig. 5 is a diagram illustrating an operation state during ABS decompression in the assist mechanism according to the embodiment;
Fig. 6 is a control block diagram of the brake device according to the embodiment;
Figs. 7A-7B are a diagram for describing a pitching behavior of a vehicle;
Fig. 8 is a flowchart illustrating a control flow of the brake device according to the embodiment; and
Fig. 9 is a flowchart illustrating the control flow of the brake device according to the embodiment.

### DESCRIPTION OF THE EMBODIMENTS

Hereinafter, embodiments of the present invention will be described with reference to the drawings. The present invention is not limited to the following embodiments, and also includes configuration changes and modifications within the scope of the gist of the present invention. In addition, all combinations of features described in the embodiments are not necessarily essential to the present invention. Note that the same components are denoted by the same reference signs, and description thereof will be omitted.

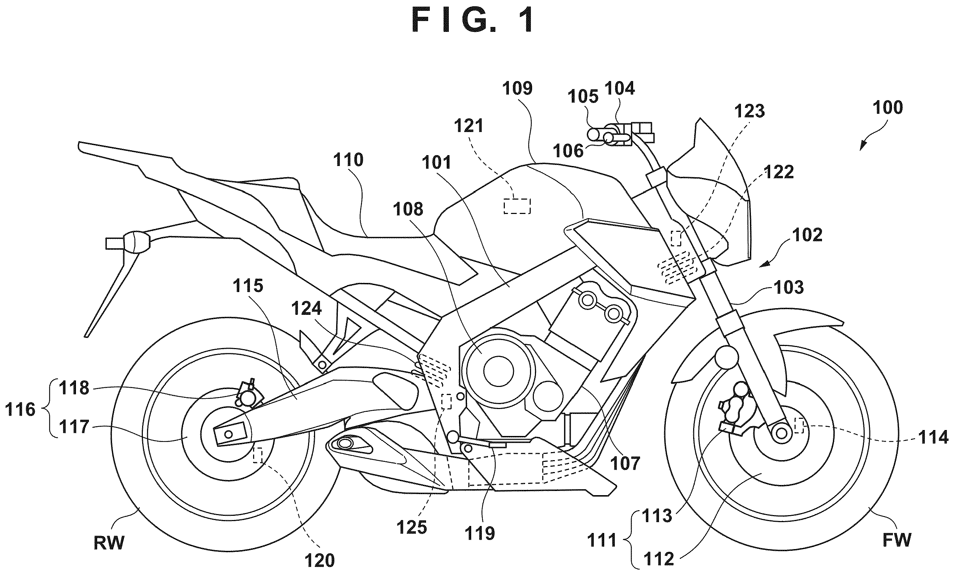

An embodiment according to the present invention will be described. Fig. 1 is a side view of a straddle type vehicle 100 (hereinafter, may be simply referred to as a vehicle 100) of the present embodiment. The vehicle 100 is a motorcycle including one front wheel FW and one rear wheel RW. Note that the present invention is not limited to the straddle type vehicle, and can be applied to other types of vehicles such as a four-wheeled vehicle.

The vehicle 100 includes a vehicle body frame 101, which forms its frame. A front wheel steering unit 102 is rotatably attached to a front end portion of the vehicle body frame 101 via a front suspension 122. The front suspension 122 is a mechanism that supports the front wheel steering unit 102 (front wheel FW) so as to be swingable in the up-and-down direction, and can be configured as an electronic control suspension capable of performing electronic control of a damping force, for example. The front suspension 122 is provided with a front stroke sensor 123 that detects a stroke amount and/or a stroke speed of the front suspension as a state of suspension of the vehicle 100. The front wheel steering unit 102 includes a pair of left and right front forks 103 supporting the front wheel FW, and a steering handle 104 attached to an upper portion of the pair of front forks 103. A right grip 105 of the steering handle 104 is an accelerator grip with which a rider (driver) is able to instruct acceleration of the vehicle 100. A brake lever 106, which receives a brake operation of the rider on the front wheel FW, is rotatably provided in the vicinity of the right grip 105.

A swing arm 115 is rotatably attached to a rear end portion of the vehicle body frame 101. The swing arm 115 is rotatably supported by the vehicle body frame 101 at the front end, and supports the rear wheel RW at the rear end. A rear suspension 124 is provided between the vehicle body frame 101 and the swing arm 115. The rear suspension 124 is a mechanism that supports the swing arm 115 (rear wheel RW) so as to be swingable in the up-and-down direction, and can be configured as an electronic control suspension capable of performing electronic control of a damping force, for example. In the vicinity of the rear suspension 124, a rear stroke sensor 125 is provided that detects a stroke amount and/or a stroke speed of the rear suspension as a state of suspension of the vehicle 100.

An internal combustion engine 107 and a transmission 108 supported by the vehicle body frame 101 are disposed in a region between the front wheel FW and the rear wheel RW. The output of the internal combustion engine 107 is transmitted to the rear wheel RW via the transmission 108 and a chain transmission mechanism (not illustrated). The present embodiment is based on a chain drive type mechanism, but a shaft drive type mechanism or a belt drive type mechanism may be used. In addition, a fuel tank 109 is disposed above the internal combustion engine 107. A seat 110 on which the rider is to sit is disposed behind the fuel tank 109. Note that the vehicle 100 of the present embodiment is a vehicle using the internal combustion engine 107 as a drive source, but is not limited thereto, and may be an electric vehicle using an electric motor as a drive source.

A brake mechanism 111 is a mechanism which applies a braking force to the front wheel FW. In the present embodiment, an example will be described in which a disc brake is used as the brake mechanism 111. The brake mechanism 111 includes a brake rotor 112 which rotates integrally coaxially with the front wheel FW and a brake caliper 113 which has a brake pad (not illustrated). The brake caliper 113 is supported by the front fork 103, and clamps the brake rotor 112 with brake pads to brake the front wheel FW rotating integrally with the brake rotor 112. A clamping force (that is, the braking force of the front wheel FW) of the brake caliper 113 can be generated according to the brake operation amount of the rider on the brake lever 106. In addition, the front fork 103 is provided with a front wheel speed sensor 114 which detects the rotation amount of the front wheel FW.

A brake mechanism 116 is a mechanism which applies a braking force to the rear wheel RW. In the present embodiment, an example will be described in which a disc brake is used as the brake mechanism 116. The brake mechanism 116 includes a brake rotor 117 which rotates integrally coaxially with the rear wheel RW, and a brake caliper 118 which has a brake pad (not illustrated). The brake caliper 118 is supported by the swing arm 115, and clamps the brake rotor 117 with brake pads to brake the rear wheel RW rotating integrally with the brake rotor 117. A brake pedal 119 (rear wheel brake operating element) that receives a brake operation of the rider with respect to the rear wheel RW is rotatably provided on a right side portion of the vehicle 100, and a clamping force (that is, the braking force of the rear wheel RW) of the brake caliper 118 can be generated according to a brake operation amount of the rider on the brake pedal 119. In addition, the swing arm 115 is provided with a rear wheel speed sensor 120 which detects the rotation amount of the rear wheel RW.

The vehicle 100 of the present embodiment is provided with an inertial sensor 121. The inertial sensor 121 includes, for example, an inertial measurement unit (IMU) and detects acceleration and an angular velocity generated in the vehicle 100 (vehicle body). Specifically, the inertial sensor 121 detects the acceleration of the vehicle 100 in each of a front-and-rear direction, a vehicle width direction, and an up-and-down direction, and detects the angular velocity of the vehicle 100 in each of a roll direction, a pitch direction, and a yaw direction. Here, in the present embodiment, an example using the inertial sensor 121 will be described, but a sensor which detects the acceleration and/or angular velocity in each direction may be individually provided. In addition, a sensor which detects the speed of the vehicle 100 in each of the front-and-rear direction, the vehicle width direction, and the up-and-down direction may be provided, or a sensor which detects the angle of the vehicle 100 in each of the roll direction, the pitch direction, and the yaw direction may be provided.

### [Configuration of Brake Device]

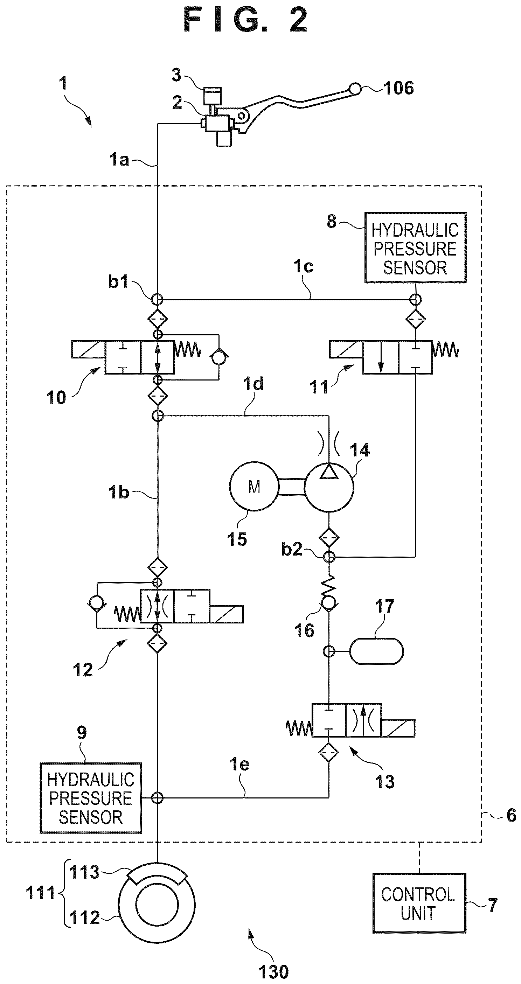

Fig. 2 is a schematic diagram illustrating a configuration example of a brake device 130 (brake system) of the front wheel FW. The brake device 130 of the front wheel FW includes a hydraulic pressure circuit 1 which supplies, to the brake caliper 113 of the brake mechanism 111, the hydraulic pressure of the brake fluid (operating fluid) generated according to the brake operation amount of the rider on the brake lever 106. The brake caliper 113 clamps the brake rotor 112 with brake pads (not illustrated) by the hydraulic pressure of the brake fluid supplied by the hydraulic pressure circuit 1, and generates the braking force of the front wheel FW. Hereinafter, the brake device 130 of the front wheel FW will be described, but the brake device 130 can be applied not only to the front wheel FW but also to the rear wheel RW. In a case where the brake device 130 is applied to the rear wheel RW, the brake device 130 (hydraulic pressure circuit 1) supplies, to the brake caliper 118 of the brake mechanism 116, the hydraulic pressure of the brake fluid (working fluid) generated according to the brake operation amount of the rider on the brake pedal 119.

The hydraulic pressure circuit 1 includes a master cylinder 2. The master cylinder 2 supplies the brake fluid stored in a reservoir 3 to a flow path 1a according to the operation amount of the brake lever 106, thereby converting the operation amount of the brake lever 106 into the hydraulic pressure of the brake fluid. When the hydraulic pressure of the brake fluid generated in the master cylinder 2 is transmitted to the brake caliper 113, the brake rotor 112 is clamped by the brake pads of the brake caliper 113, and the braking force of the front wheel FW is generated.

In the brake device 130 of the present embodiment, in a case where an emergency brake operation for suddenly stopping the vehicle 100 is input to the brake lever 106 by the rider, pressure assist is performed to increase the braking force of the front wheel FW by increasing the hydraulic pressure of the brake fluid applied to the brake caliper 113. In addition, during the operation of the anti-lock brake system (ABS), pressure reduction assist may be performed which reduces the braking force of the front wheel FW by reducing the hydraulic pressure of the brake fluid supplied to the brake caliper 113. In order to perform such brake assist including pressure assist and pressure reduction assist, the brake device 130 of the present embodiment is provided with an assist mechanism 6 which performs brake assist, and a control unit 7 which controls the brake assist by the assist mechanism 6. Hereinafter, an example in which the assist mechanism 6 is configured by a reflux type hydraulic pressure modulator will be described, but the present invention is not limited thereto, and the assist mechanism 6 may be configured by another mechanism such as a brake-by-wire.

The assist mechanism 6 (hydraulic pressure modulator) includes a plurality of electromagnetic valves 10 to 13 (valves) driving of which is controlled by the control unit 7, and a motor 15. The electromagnetic valve 10 and the electromagnetic valve 12 may be normally open electromagnetic on-off valves, and the electromagnetic valve 11 and the electromagnetic valve 13 may be normally closed electromagnetic on-off valves. The flow path 1a of the brake fluid branches into a flow path 1b and a flow path 1c at a branch point b1. The flow path 1b is connected to the brake caliper 113.

The electromagnetic valve 10 and the electromagnetic valve 12 are provided in the flow path 1b to open and close the flow path 1b. The electromagnetic valve 12 is disposed closer to the brake caliper 113 than the electromagnetic valve 10 in the flow path 1b. In addition, the electromagnetic valve 11 is provided in the flow path 1c to open and close the flow path 1c.

The flow path 1c branches into a flow path 1d and a flow path 1e at a branch point b2. The flow path 1d communicates the branch point b2 with a portion of the flow path 1b between the electromagnetic valve 10 and the electromagnetic valve 12. A pump 14 driven by the motor 15 is provided in the flow path 1d. The output port of the pump 14 is located on the flow path 1b side, and the input port of the pump 14 is located on the branch point b2 side. When the motor 15 is driven, the brake fluid is delivered in the direction of the branch point b2 → the flow path 1d → the flow path 1b by the pump 14. On the other hand, the flow path 1e communicates the branch point b2 with a portion of the flow path 1b between the electromagnetic valve 12 and the brake caliper 113.

The electromagnetic valve 13 is provided in the flow path 1e to open and close the flow path 1e. A check valve 16 and a reservoir portion 17 are provided in the flow path 1e between the electromagnetic valve 13 and the branch point b2. The check valve 16 is configured to allow the flow of the brake fluid in the direction from the electromagnetic valve 13 toward the pump 14, and regulate the flow of the brake fluid in the opposite direction. The reservoir portion 17 communicates between the electromagnetic valve 13 and the check valve 16 and is configured to store the brake fluid. In the present embodiment, the reservoir portion 17 is an accumulator.

The flow path 1c is provided with a hydraulic pressure sensor 8 which detects the hydraulic pressure of the brake fluid in the flow path 1c between the branch point b1 and the electromagnetic valve 11. The hydraulic pressure sensor 8 is a sensor that detects a master cylinder pressure which is the pressure of the brake fluid of the master cylinder 2. Hereinafter, the hydraulic pressure sensor 8 may be referred to as an "M/C pressure sensor 8", and the master cylinder pressure detected by the M/C pressure sensor 8 may be referred to as an "M/C detection value". In the present embodiment, the M/C pressure sensor 8 is used as an operation detection unit that detects an operation index value varying according to the brake operation amount of the rider (operation amount of the brake lever 106), and the M/C detection value can be used as a detection value of the operation index value obtained by the operation detection unit.

In addition, the flow path 1b is provided with a hydraulic pressure sensor 9 which detects the hydraulic pressure of the brake fluid in the flow path 1b between the electromagnetic valve 12 and the brake caliper 113. The hydraulic pressure sensor 9 is a sensor that detects a brake caliper pressure which is the pressure of the brake fluid of the brake caliper 113. Hereinafter, the hydraulic pressure sensor 9 may be referred to as a "CAL pressure sensor 9", and the brake caliper pressure detected by the CAL pressure sensor 9 may be referred to as a "CAL detection value".

In the assist mechanism 6 (hydraulic pressure modulator) configured as described above, the flow path 1a and the flow path 1b constitute a main flow path for causing the brake fluid to flow from the master cylinder 2 to the brake caliper 113. In addition, the flow path 1d and the flow path 1e constitute a sub flow path for causing the brake fluid to flow back (return) from the brake caliper 113 to the main flow path (flow path 1b). The flow path 1c constitutes a supply flow path for supplying the brake fluid from the main flow path (flow path 1a) to the sub flow path (flow path 1d, flow path 1e). The flow of the brake fluid in the main flow path, the sub flow path, and the supply flow path is controlled by driving the plurality of electromagnetic valves 10 to 13 and the motor 15 (pump 14).

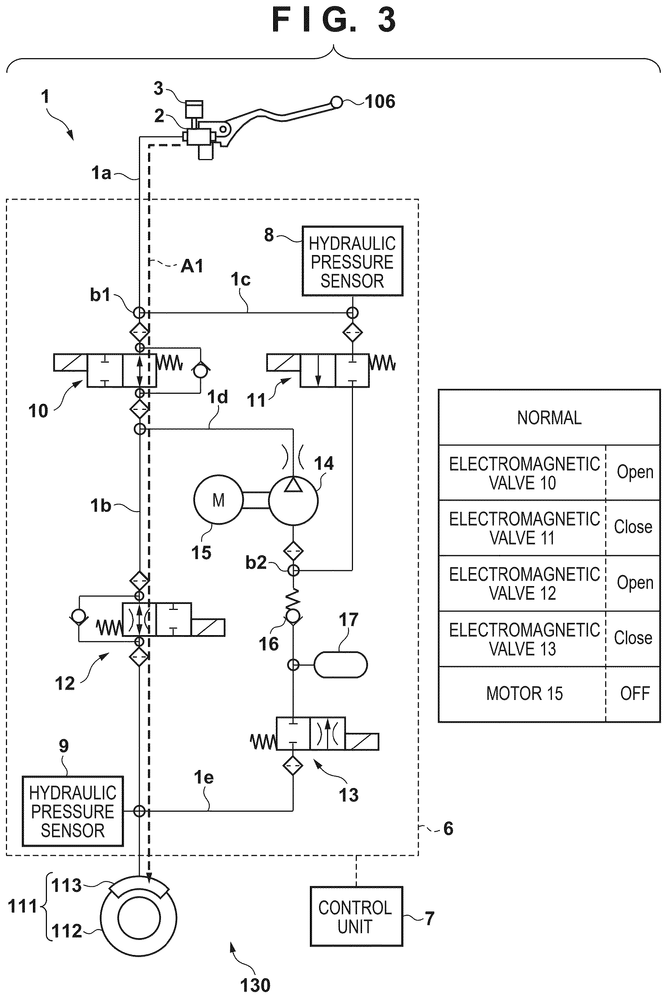

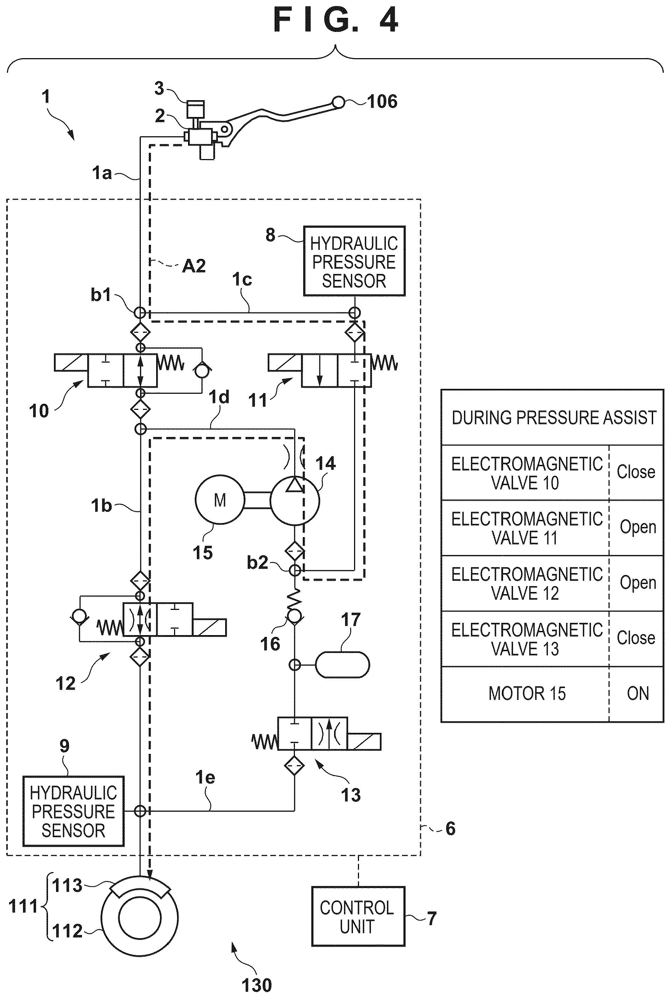

For example, in the assist mechanism 6 in a normal state (a state where brake assist is not executed), only the main flow path (flow path 1a, 1b) communicates with the assist mechanism 6 as indicated by a broken line arrow A1 in Fig. 3, and the brake fluid corresponding to the operation amount of the brake lever 106 is supplied from the master cylinder 2 to the brake caliper 113 via the main flow path. On the other hand, in the assist mechanism 6 in a state where the pressure assist is performed as the brake assist, the supply flow path (flow path 1c) further communicates with the assist mechanism 6 as indicated by a broken line arrow A2 in Fig. 4, and the brake fluid is supplied from the master cylinder 2 to the brake caliper 113 via the supply flow path. In this operation state, the electromagnetic valve 10 can be appropriately opened and closed for pressure adjustment.

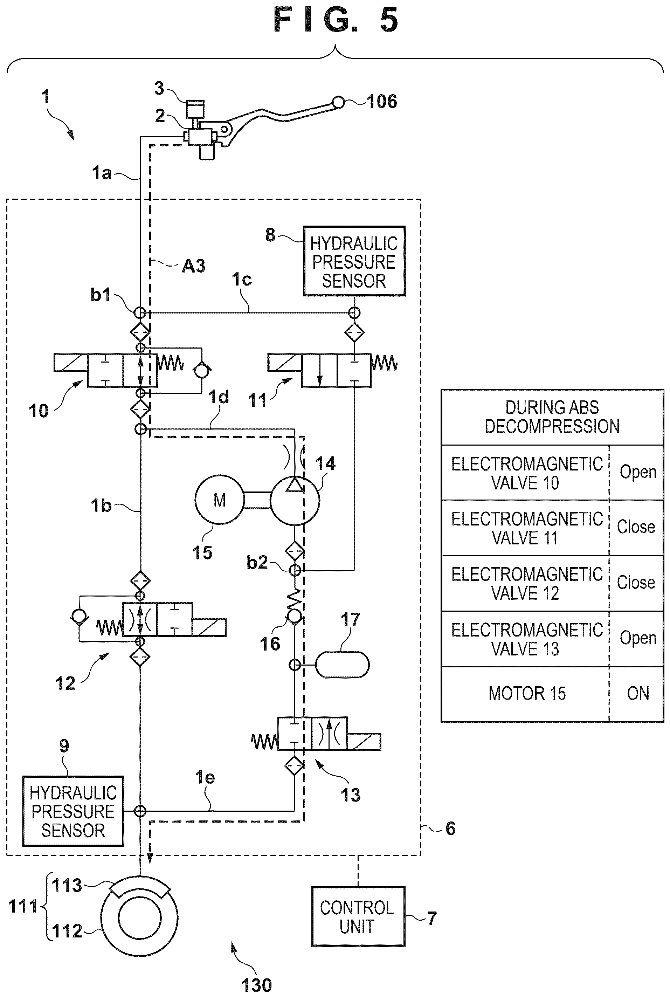

In the assist mechanism 6 in a state where the brake caliper pressure is reduced during the ABS operation, as indicated by a broken line arrow A3 in Fig. 5, the sub flow path (flow path 1d, 1e) communicates with the assist mechanism 6, and the brake fluid is returned from the brake caliper 113 to the master cylinder 2 through the sub flow path. In the assist mechanism 6 in a state where the brake caliper pressure is held during the ABS operation, the motor 15 is stopped and the electromagnetic valve 13 is closed in the state of Fig. 5. In the assist mechanism 6 in a state where the brake caliper pressure is increased during the ABS operation, the motor 15 is stopped and the electromagnetic valve 13 is closed and the electromagnetic valve 12 is opened in the state of Fig. 5.

### [Control Block Diagram of Brake Device]

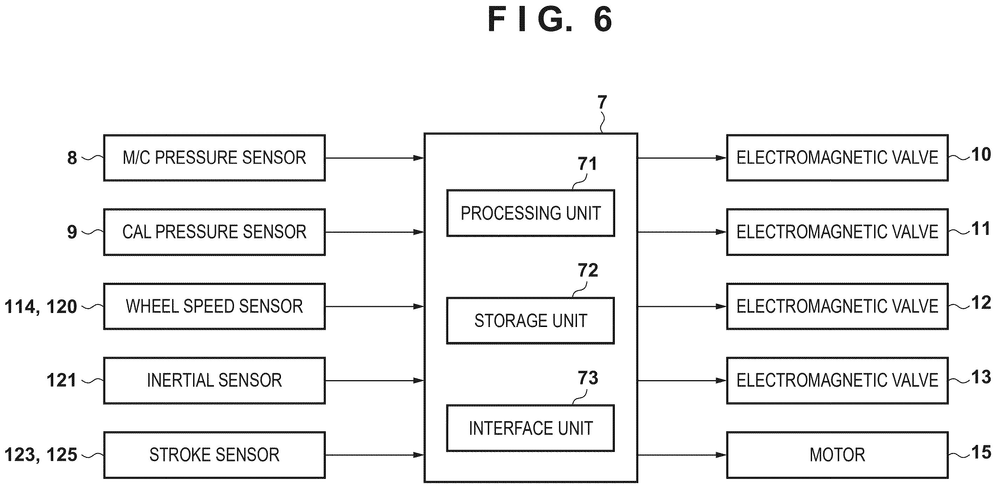

Fig. 6 is a control block diagram of the brake device 130. The control unit 7 includes a processing unit 71, a storage unit 72 such as a RAM and a ROM, and an interface unit 73 that relays transmission and reception of signals to and from an external device. The processing unit 71 is a processor represented by a CPU, and executes a program stored in the storage unit 72 to control the assist mechanism 6. The storage unit 72 stores various types of data in addition to the program executed by the processing unit 71. Detection results of the M/C pressure sensor 8, the CAL pressure sensor 9, the wheel speed sensor (front wheel speed sensor 114, rear wheel speed sensor 120), the inertial sensor 121, and the stroke sensor (front stroke sensor 123, rear stroke sensor 125) are input to the interface unit 73 via a signal processing circuit (not illustrated). The processing unit 71 controls driving of each of the electromagnetic valves 10 to 13 and the motor 15 by a drive circuit (not illustrated) on the basis of these detection results. Note that the control unit 7 (processing unit 71) may be configured by an electronic control unit (ECU) mounted on the vehicle 100.

In the brake device 130 configured as described above, conventionally, the master cylinder pressure is detected by the M/C pressure sensor 8 as the brake operation amount of the rider, and the brake assist is controlled by the assist mechanism 6 on the basis of only the master cylinder pressure (M/C detection value) detected by the M/C pressure sensor 8. However, in the assist mechanism 6 including a reflux type hydraulic pressure modulator or the like, a situation in which the brake operation amount of the rider and the M/C detection value do not match may occur. For example, during the execution of pressure assist, the brake fluid of the master cylinder 2 flows into the sub flow path (flow path 1d) via the supply flow path (flow path 1c), so that the M/C detection value may become less than a value corresponding to the brake operation amount of the rider. In addition, in a case where pressure reduction assist is executed during the ABS operation, the brake fluid flows back to the main flow path (flow path 1a) via the sub flow path (flow path 1d, 1e), so that the M/C detection value can be greater than the value corresponding to the brake operation amount of the rider. Therefore, when the brake assist by the assist mechanism 6 is controlled using only the M/C detection value, there is a possibility that the brake assist according to the intention of the rider is not appropriately performed.

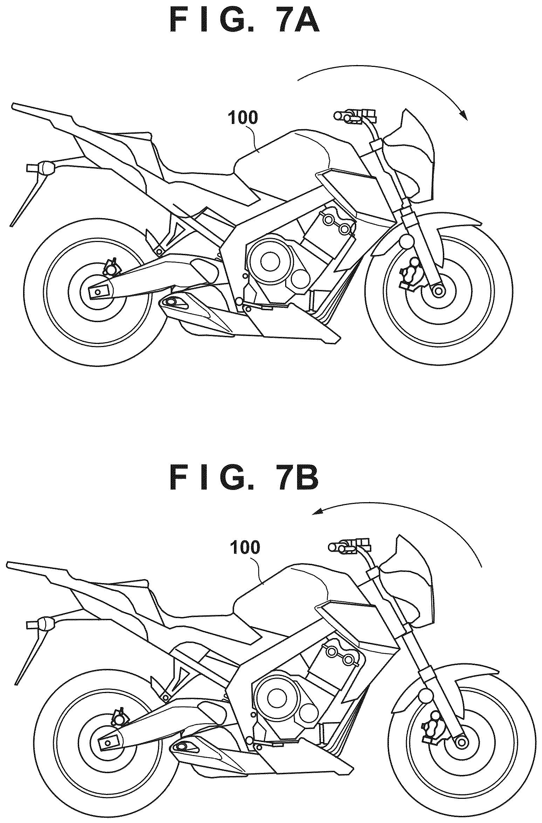

Therefore, in the brake device 130 of the present embodiment, the pitching behavior of the vehicle 100 is detected, and the brake assist by the assist mechanism 6 is controlled according to the detection result (pitching behavior). For example, in a case where the front of the vehicle 100 pitches downward as illustrated in Fig. 7A, there is a high possibility that the rider has intentionally performed an emergency brake operation for suddenly stopping the vehicle 100 to increase the deceleration of the vehicle 100. In this case, the brake device 130 (control unit 7) executes the brake assist so as to increase the assist amount of the brake assist. On the other hand, in a case where the front of the vehicle 100 pitches upward as illustrated in Fig. 7B during the execution of the brake assist, there is a high possibility that the rider has intentionally decreased (loosened) the brake operation amount to decrease the deceleration of the vehicle 100. In this case, the brake device 130 (control unit 7) decreases the assist amount of the brake assist. That is, by controlling the brake assist according to the pitching behavior of the vehicle 100, brake assist according to the intention of the rider can be appropriately performed.

Here, the pitching behavior of the vehicle 100 is a behavior in which the vehicle 100 rotates in the pitch direction. In the case of the present embodiment, at least one of the inertial sensor 121, the front stroke sensor 123, and the rear stroke sensor 125 can be used as a behavior detection unit that detects the pitching behavior of the vehicle 100. In the present embodiment, decreasing the assist amount of the brake assist may include releasing the brake assist (that is, setting the assist amount to zero).

### [Control Flow of Brake Assist]

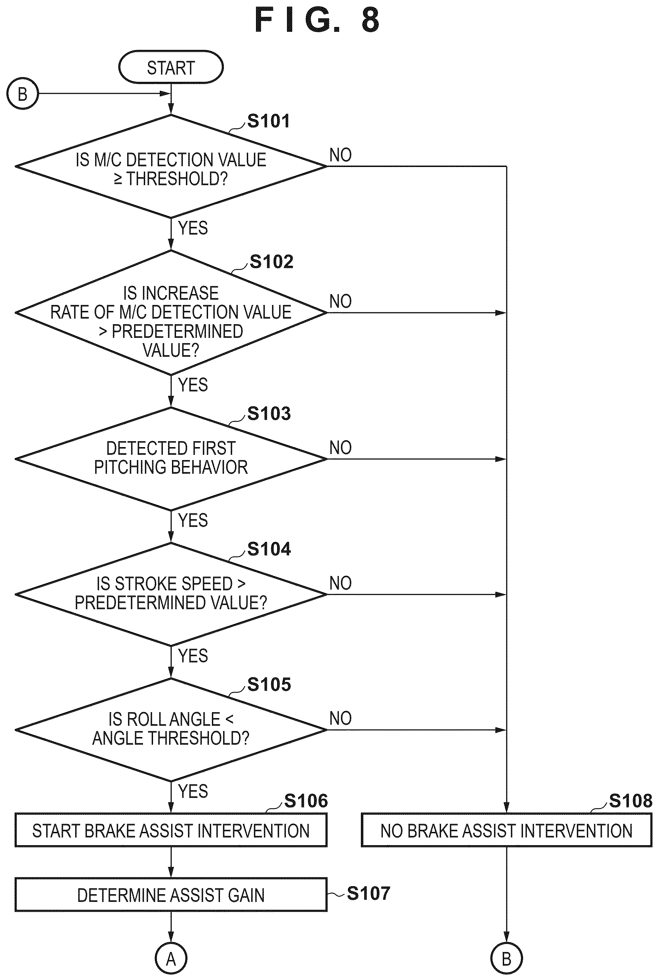

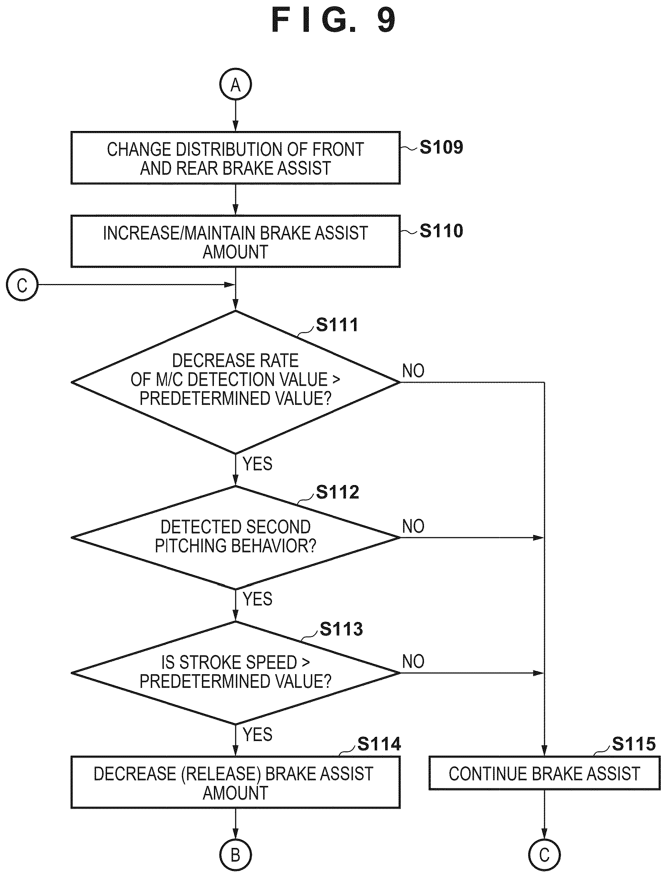

Hereinafter, an example of a control flow of brake assist in the brake device 130 of the present embodiment will be described. Figs. 8 and 9 are flowcharts illustrating a control flow of the brake device 130 according to the present embodiment. The control flow of Figs. 8 and 9 may be executed by the control unit 7 (processing unit 71, for example).

In step S101, the control unit 7 determines whether or not the M/C detection value detected by the M/C pressure sensor 8 is equal to or greater than a threshold. The threshold used in this step S101 may be set in advance to a value with which it can be determined whether or not a brake operation (for example, the operation of the brake lever 106) has been performed by the rider. If the M/C detection value is less than the threshold, the control unit 7 determines that the brake operation by the rider is not performed, proceeds to step S108, and does not perform the intervention (execution) of the brake assist by the assist mechanism 6. On the other hand, if the M/C detection value is equal to or greater than the threshold, the control unit 7 determines that the brake operation by the rider is being performed and proceeds to step S102.

In step S102, the control unit 7 determines whether or not an increase rate of the M/C detection value larger than a predetermined value is detected by the M/C pressure sensor 8. As described above, in the present embodiment, the M/C pressure sensor 8 is used as the operation detection unit that detects the operation index value varying according to the brake operation amount of the rider, and the M/C detection value is used as the operation index value. That is, the change (increase rate) of the M/C detection value detected by the M/C pressure sensor 8 is used as the change (increase rate) of the operation index value detected by the operation detection unit. In addition, the predetermined value used in this step S102 can be set in advance to a value (increase rate) with which it can be determined whether or not the rider performed the emergency brake operation intentionally using an experiment, a simulation, or the like.

If an increase rate of the M/C detection value larger than the predetermined value is not detected, the control unit 7 determines that the emergency brake operation has not been performed by the rider, proceeds to step S108, and does not perform the intervention (execution) of the brake assist by the assist mechanism 6. On the other hand, if an increase rate of the M/C detection value larger than the predetermined value is detected, the control unit 7 determines that there is a possibility that the emergency brake operation has been performed by the rider, and proceeds to step S103.

In step S103, the control unit 7 determines whether or not a first pitching behavior of the vehicle 100 is detected. The first pitching behavior is a behavior in which the pitching amount of the vehicle 100 becomes larger than a predetermined amount. The first pitching behavior may be understood as a behavior in which the front of the vehicle 100 pitches downward as illustrated in Fig. 7A. In addition, the predetermined amount used in this step S103 can be set in advance to a pitching amount with which it can be determined whether or not the rider performed the emergency brake operation intentionally using an experiment, a simulation, or the like.

If the first pitching behavior of the vehicle 100 is not detected, the control unit 7 determines that the emergency brake operation has not been performed by the rider even in a case where an increase rate of the M/C detection value larger than the predetermined value is detected in step S102, proceeds to step S108, and does not perform the intervention (execution) of the brake assist by the assist mechanism 6. On the other hand, if the first pitching behavior of the vehicle 100 is detected, it is determined that there is a possibility that the emergency brake operation has been performed by the rider, and the processing proceeds to step S104.

Here, as described above, in the present embodiment, at least one of the inertial sensor 121, the front stroke sensor 123, and the rear stroke sensor 125 can be used as the behavior detection unit that detects the pitching behavior of the vehicle 100. For example, in a case where the inertial sensor 121 detects that the front of the vehicle 100 pitches downward with a rotation amount larger than a predetermined amount, the control unit 7 can determine that the first pitching behavior of the vehicle 100 is detected. The control unit 7 may determine that the first pitching behavior of the vehicle 100 is detected in a case where the front stroke sensor 123 detects that the front suspension 122 is contracted with a stroke amount larger than a predetermined amount as the state of suspension of the vehicle 100. The control unit 7 may determine that the first pitching behavior of the vehicle 100 is detected in a case where the rear stroke sensor 125 detects that the rear suspension 124 is extended with a stroke amount larger than a predetermined amount as the state of suspension of the vehicle 100.

In the present embodiment, whether or not the rider has performed the emergency brake operation intentionally is determined by using, in combination, the determination of the increase rate of the M/C detection value in step S 102 and the determination of the first pitching behavior in step S103, but the present invention is not limited thereto. For example, whether or not the rider has performed the emergency brake operation intentionally may be determined using only the detection of the first pitching behavior in step S103. In this case, steps S101 and S102 can be omitted.

In step S104, the control unit 7 determines whether or not the suspension of the vehicle 100 has changed at a stroke speed higher than a predetermined value. The stroke speed of the suspension can be detected as the state of suspension of the vehicle 100 by at least one of the front stroke sensor 123 and the rear stroke sensor 125 as the behavior detection unit. For example, the control unit 7 determines whether or not the front stroke sensor 123 has detected that the front suspension 122 has contracted at a stroke speed higher than a predetermined value, and/or whether the rear stroke sensor 125 has detected that the rear suspension 124 has contracted at a stroke speed higher than a predetermined value. In addition, the predetermined value used in this step S104 can be set in advance to a value of a stroke speed with which it can be determined whether or not the rider performed the emergency brake operation intentionally using an experiment, a simulation, or the like.

If the suspension of the vehicle 100 has not changed at a stroke speed higher than the predetermined value, the control unit 7 determines that the emergency brake operation has not been performed by the rider, proceeds to step S108, and does not perform the intervention (execution) of the brake assist by the assist mechanism 6. On the other hand, if the suspension of the vehicle 100 has changed at a stroke speed higher than the predetermined value, it is determined that the emergency brake operation has been performed by the rider, and the processing proceeds to step S105.

In the present embodiment, whether or not the rider has performed the emergency brake operation intentionally is determined by using the determination of the increase rate of the M/C detection value in step S102, the detection of the first pitching behavior in step S103, and the determination of the stroke speed in step S104, but the present invention is not limited thereto. For example, whether or not the rider has performed the emergency brake operation intentionally may be determined using only the determination of the stroke speed in step S104. In this case, steps S101 to S103 can be omitted.

In step S105, the control unit 7 determines whether or not a roll angle (bank angle) of the vehicle 100 is smaller than an angle threshold, on the basis of the detection result of the inertial sensor 121. For example, the roll angle of the vehicle 100 can be obtained by integrating the angular velocity in the roll direction detected by the inertial sensor 121. In a case where the roll angle of the vehicle 100 is large, when the brake assist (pressure assist) is performed in addition to the emergency brake operation by the rider, the posture of the vehicle 100 may become unstable. Therefore, the angle threshold can be set in advance to a value (for example, a limit value) that allows for stabilization of the posture of the vehicle 100 even when the brake assist is performed in addition to the emergency brake operation, using an experiment, a simulation, or the like. If the roll angle of the vehicle 100 is larger than the angle threshold, the processing proceeds to step S108, and the control unit 7 does not perform intervention (execution) of brake assist by the assist mechanism 6. On the other hand, if the roll angle of the vehicle 100 is equal to or smaller than the angle threshold, the processing proceeds to step S106.

In step S106, the control unit 7 starts the brake assist intervention based on the M/C detection value. Next, in step S107, the control unit 7 determines a gain (assist gain) of the brake assist according to the vehicle speed (the speed of the vehicle 100) at the time of brake assist intervention. The assist gain may be understood as an amplification factor of the pressure. The vehicle speed can be obtained on the basis of the detection results of the wheel speed sensors 114 and 120. For example, the control unit 7 holds information indicating a relationship between the vehicle speed and the assist gain in advance in the storage unit 72, and can determine the assist gain from the vehicle speed on the basis of the information.

Referring to Fig. 9, in step S109, the control unit 7 changes the distribution of the braking force (brake assist) in the front and rear of the vehicle, that is, the distribution of the braking force (brake assist) between the front wheel FW and the rear wheel RW according to the pitch angle of the vehicle 100. The pitch angle of the vehicle can be obtained by integrating the angular velocity in the pitch direction detected by the inertial sensor 121. For example, the control unit 7 changes the distribution of the braking force between the front wheel FW and the rear wheel RW such that the braking force of the rear wheel RW becomes greater than the braking force of the front wheel FW along with an increase in a pitch angle in which a direction in which the front of the vehicle 100 moves downward is set to a positive direction. As an example, in a case where the pitch angle in the positive direction is increased by an emergency brake operation, the brake assist intervention is made in the brake device 130 (assist mechanism 6) of the rear wheel RW, and the brake assist intervention is not made in the brake device 130 (assist mechanism 6) of the front wheel FW. As a result, the posture of the vehicle 100 in the pitch direction can be stabilized.

In step S110, the control unit 7 increases or maintains the brake assist amount according to the elapsed time from the start of the brake assist intervention in step S106. For example, the control unit 7 increases the brake assist amount at a predetermined increase rate until a predetermined time elapses from the start of the brake assist intervention, and maintains the brake assist amount constant after the predetermined time elapses.

In step S111, the control unit 7 determines whether or not a decrease rate of the M/C detection value larger than a predetermined value is detected by the M/C pressure sensor 8. In the present embodiment, the change (decrease rate) of the M/C detection value detected by the M/C pressure sensor 8 is used as the change (decrease rate) of the operation index value detected by the operation detection unit. In addition, the predetermined value used in this step S111 can be set in advance to a value (decrease rate) with which it can be determined whether or not the rider decreased the brake operation amount intentionally using an experiment, a simulation, or the like.

If a decrease rate of the M/C detection value larger than the predetermined value is not detected, the control unit 7 determines that the rider has not decreased the brake operation amount intentionally, proceeds to step S115, and continues the brake assist by the assist mechanism 6. On the other hand, if a decrease rate of the M/C detection value larger than the predetermined value is detected, the control unit 7 determines that there is a possibility that the rider has decreased the brake operation amount intentionally, and proceeds to step S112.

In step S112, the control unit 7 determines whether or not a second pitching behavior of the vehicle 100 is detected. The second pitching behavior is a behavior in which the pitching amount of the vehicle 100 becomes larger than a predetermined amount. The second pitching behavior may be understood as a behavior in which the front of the vehicle 100 pitches upward as illustrated in Fig. 7B. In addition, by using an experiment, a simulation, or the like, the predetermined amount used in this step S112 can be set in advance to a pitching amount with which it can be determined whether or not the rider decreased the brake operation amount intentionally.

If the second pitching behavior of the vehicle 100 is not detected, the control unit 7 determines that the rider has not decreased the brake operation amount intentionally even in a case where a decrease rate of the M/C detection value larger than the predetermined value is detected in step S111, proceeds to step S115, and continues the brake assist by the assist mechanism 6. On the other hand, if the second pitching behavior of the vehicle 100 is detected, it is determined that there is a possibility that the rider has decreased the brake operation amount intentionally, and the processing proceeds to step S113.

Here, as described above, in the present embodiment, at least one of the inertial sensor 121, the front stroke sensor 123, and the rear stroke sensor 125 can be used as the behavior detection unit that detects the pitching behavior of the vehicle 100. For example, in a case where the inertial sensor 121 detects that the front of the vehicle 100 pitches upward with a rotation amount larger than a predetermined amount, the control unit 7 can determine that the second pitching behavior of the vehicle 100 is detected. The control unit 7 may determine that the second pitching behavior of the vehicle 100 is detected in a case where the front stroke sensor 123 detects that the front suspension 122 is extended with a stroke amount larger than a predetermined amount as the state of suspension of the vehicle 100. The control unit 7 may determine that the second pitching behavior of the vehicle 100 is detected in a case where the rear stroke sensor 125 detects that the rear suspension 124 is contracted with a stroke amount larger than a predetermined amount as the state of suspension of the vehicle 100.

In the present embodiment, whether or not the rider has decreased the brake operation amount intentionally is determined by using, in combination, the determination of the decrease rate of the M/C detection value in step S111 and the determination of the second pitching behavior in step S112, but the present invention is not limited thereto. For example, whether or not the rider has decreased the brake operation amount intentionally may be determined using only the detection of the second pitching behavior in step S112. In this case, step S111 can be omitted.

In step S113, the control unit 7 determines whether or not the suspension of the vehicle 100 has changed at a stroke speed higher than a predetermined value. The stroke speed of the suspension can be detected as the state of suspension of the vehicle 100 by at least one of the front stroke sensor 123 and the rear stroke sensor 125 as the behavior detection unit. For example, the control unit 7 determines whether or not the front stroke sensor 123 has detected that the front suspension 122 has contracted at a stroke speed higher than a predetermined value, and/or whether the rear stroke sensor 125 has detected that the rear suspension 124 has contracted at a stroke speed higher than a predetermined value. In addition, the predetermined value used in this step S104 can be set in advance to a value of a stroke speed with which it can be determined whether or not the rider decreased the brake operation amount intentionally using an experiment, a simulation, or the like.

If the suspension of the vehicle 100 has not changed at a stroke speed higher than the predetermined value, the control unit 7 determines that the rider has not decreased the brake operation amount intentionally, proceeds to step S115, and continues the brake assist by the assist mechanism 6. On the other hand, if the suspension of the vehicle 100 has changed at a stroke speed higher than the predetermined value, the it is determined that the rider has decreased the brake operation amount intentionally, the processing proceeds to step S114, and the assist amount of the brake assist by the assist mechanism 6 is decreased. Note that decreasing the assist amount of the brake assist may include releasing the brake assist (that is, setting the assist amount to zero).

In the present embodiment, whether or not the rider has performed the emergency brake operation intentionally is determined by using, in combination, the determination of the increase rate of the M/C detection value in step S111, the detection of the first pitching behavior in step S112, and the determination of the stroke speed in step S113, but the present invention is not limited thereto. For example, whether or not the rider has performed the emergency brake operation intentionally may be determined using only the determination of the stroke speed in step S113. In this case, steps S111 and S112 can be omitted.

Here, when determining that the vehicle 100 has stopped, the control unit 7 may release the brake assist by the assist mechanism 6. For example, the determination condition for determining the stop of the vehicle 100 includes a first condition related to the state of suspension of the vehicle 100 and a second condition related to the brake operation of the rider. When the first condition and the second condition are satisfied, the control unit 7 determines that the vehicle 100 has stopped and releases the brake assist by the assist mechanism 6.

The first condition related to the state of suspension of the vehicle 100 may include a condition that the front stroke sensor 123 detects that the stroke speed of the front suspension 122 when the front suspension 122 extends falls below a predetermined value, and/or a condition that the front stroke sensor 123 detects that the stroke speed of the rear suspension 124 when the rear suspension 124 contracts falls below a predetermined value. The predetermined value here is set in advance to a value of a stroke speed with which it can be determined whether or not the vehicle 100 has stopped, using an experiment, a simulation, or the like.

The second condition related to the brake operation of the rider may include a condition that the M/C detection value detected by the M/C pressure sensor 8 is less than a threshold. The threshold here may be the same as the threshold used in step S101 described above, and may be set in advance to a value with which it can be determined whether or not the brake operation by the rider has been released. In a case where the M/C detection value detected by the M/C pressure sensor 8 is less than the threshold, the control unit 7 can determine that the brake operation by the rider is released.

As described above, in the brake device 130 of the present embodiment, the pitching behavior of the vehicle 100 is detected, and the brake assist by the assist mechanism 6 is controlled according to the detection result. As a result, in the assist mechanism 6 (reflux type hydraulic pressure modulator), even in a situation where the brake operation amount of the rider and the M/C detection value do not match, it is possible to appropriately perform the brake assist according to the intention of the rider.

### <Summary of Embodiments>

### (Item 1)

A brake device (e.g. 130) of a vehicle (e.g. 100) characterized by comprising:
an assist mechanism (e.g. 6) that performs brake assist for increasing a braking force of the vehicle;
a behavior detection unit (e.g. 121, 123, 125) that detects a pitching behavior of the vehicle; and
a control unit (e.g. 7) that controls the brake assist by the assist mechanism according to the pitching behavior detected by the behavior detection unit.

According to this item, by using the pitching behavior accompanying the deceleration of the vehicle as a basis for determining whether or not the rider has performed the brake operation intentionally, it is possible to appropriately perform the brake assist according to the actual brake operation of the rider even when the detection value detected as the brake operation amount of the driver does not match the intention of the rider.

### (Item 2)

The brake device according to item 1, characterized by further comprising an operation detection unit (e.g. 8) that detects an operation index value varying according to a brake operation amount of a driver,
wherein the control unit controls the brake assist by the assist mechanism according also to a change in the operation index value detected by the operation detection unit.

According to this item, by using, in combination, the change in the operation index value and the pitching behavior accompanying the deceleration of the vehicle, it is possible to more appropriately perform the brake assist according to the actual brake operation of the rider.

### (Item 3)

The brake device according to item 2, characterized in that the control unit executes the brake assist by the assist mechanism in a case where the operation detection unit detects an increase rate of the operation index value larger than a predetermined value and the behavior detection unit detects a first pitching behavior in which a pitching amount of the vehicle becomes larger than a predetermined amount.

According to this item, by using, in combination, the increase rate of the operation index value and the pitching behavior accompanying the deceleration of the vehicle to determine whether or not the rider has performed the emergency brake operation intentionally, it is possible to more appropriately perform the brake assist according to the actual brake operation of the rider.

### (Item 4)

The brake device according to item 3, characterized in that the first pitching behavior is a behavior in which the front of the vehicle pitches downward.

According to this item, by detecting the behavior in which the front of the vehicle pitches downward, it is possible to accurately determine whether or not the rider has intentionally increased the brake operation amount for an emergency brake or whether or not an inconsistency has occurred between the brake operation amount detection value and the rider operation.

### (Item 5)

The brake device according to any one of items 2 to 4, characterized in that the control unit decreases an assist amount of the brake assist in a case where the operation detection unit detects a decrease rate of the operation index value larger than a predetermined value and the behavior detection unit detects a second pitching behavior in which a pitching amount of the vehicle becomes larger than a predetermined amount during execution of the brake assist by the assist mechanism.

According to this item, by using, in combination, the decrease rate of the operation index value and the pitching behavior of the vehicle to determine whether or not the rider has intentionally decreased the brake operation amount or whether or not an inconsistency has occurred between the brake operation amount detection value and the rider operation, it is possible to more appropriately perform the brake assist according to the actual brake operation of the rider.

### (Item 6)

The brake device according to item 5, characterized in that the second pitching behavior is a behavior in which the front of the vehicle pitches upward.

According to this item, by detecting the behavior in which the front of the vehicle pitches upward, it is possible to accurately determine whether the rider has performed a brake release operation or it is a pitching motion due to activation of the anti-lock brake system.

### (Item 7)

The brake device according to any one of items 2 to 6, characterized in that the behavior detection unit detects the pitching behavior by detecting a state of suspension of the vehicle.

According to this item, the pitching behavior of the vehicle used for the brake assist control can be detected using the state of suspension of the vehicle.

### (Item 8)

The brake device according to item 7, characterized in that the control unit executes the brake assist by the assist mechanism in a case where the behavior detection unit detects, as the state of suspension, that a front suspension of the vehicle contracts by a stroke amount larger than a predetermined amount in a state where the operation index value larger than a predetermined value is input.

According to this item, since whether the rider has intentionally increased the brake operation amount for an emergency brake or whether an inconsistency has occurred between the brake operation amount detection value and the rider operation can be determined on the basis of the stroke amount of the front suspension, it is possible to more appropriately perform the brake assist according to the actual brake operation of the rider.

### (Item 9)

The brake device according to item 7 or 8, characterized in that the control unit executes the brake assist by the assist mechanism in a case where the behavior detection unit detects, as the state of suspension, that a rear suspension of the vehicle extends by a stroke amount larger than a predetermined amount in a state where the operation index value larger than a predetermined value is input.

According to this item, since whether the rider has intentionally increased the brake operation amount for an emergency brake or whether an inconsistency has occurred between the brake operation amount detection value and the rider operation can be determined on the basis of the stroke amount of the rear suspension, it is possible to more appropriately perform the brake assist according to the actual brake operation of the rider.

### (Item 10)

The brake device according to any one of items 7 to 9, characterized in that the control unit decreases an assist amount of the brake assist in a case where the behavior detection unit detects, as the state of suspension, that a front suspension of the vehicle extends with a stroke amount larger than a predetermined amount during execution of the brake assist by the assist mechanism.

According to this item, since whether the rider has intentionally decreased the brake operation amount or whether an inconsistency has occurred between the brake operation amount detection value and the rider operation can be determined on the basis of the stroke amount of the front suspension, it is possible to more appropriately perform the brake assist according to the actual brake operation of the rider.

### (Item 11)

The brake device according to any one of items 7 to 10, characterized in that the control unit decreases an assist amount of the brake assist in a case where the behavior detection unit detects, as the state of suspension, that a rear suspension of the vehicle contracts more than a predetermined amount during execution of the brake assist by the assist mechanism.

According to this item, since whether the rider has intentionally decreased the brake operation amount or whether or not an inconsistency has occurred between the brake operation amount detection value and the rider operation can be determined on the basis of the stroke amount of the rear suspension, it is possible to more appropriately perform the brake assist according to the actual brake operation of the rider.

### (Item 12)

The brake device according to any one of items 7 to 11, characterized in that the control unit executes assist of the brake assist in a case where the behavior detection unit detects, as the state of suspension, that a suspension of the vehicle changes at a stroke speed higher than a predetermined value.

According to this item, since whether the rider has intentionally increased the brake operation amount for an emergency brake or whether an inconsistency has occurred between the brake operation amount detection value and the rider operation can be determined on the basis of the stroke speed of the suspension of the vehicle, it is possible to more appropriately perform the brake assist according to the actual brake operation of the rider.

### (Item 13)

The brake device according to any one of items 7 to 12, characterized in that the control unit decreases an assist amount of the brake assist in a case where the behavior detection unit detects, as the state of suspension, that a suspension of the vehicle changes at a stroke speed higher than a predetermined value during execution of the brake assist by the assist mechanism.

According to this item, since whether the rider has intentionally decreased the brake operation amount, whether an inconsistency has occurred between the brake operation amount detection value and the rider operation, or whether the cause is external disturbances (such as road surface irregularities) can be determined on the basis of the stroke speed of the suspension of the vehicle, it is possible to more appropriately perform the brake assist according to the intention of the rider.

### (Item 14)

The brake device according to any one of items 7 to 13, characterized by further comprising an operation detection unit (e.g. 8) that detects an operation index value varying according to a brake operation amount of a driver,
wherein the control unit releases the brake assist by the assist mechanism in a case where the behavior detection unit detects, as the state of suspension, that a stroke speed of a front suspension of the vehicle when the front suspension extends falls below a predetermined value and the operation index value detected by the operation detection unit is less than a threshold during execution of the brake assist by the assist mechanism.

According to this item, it is possible to use, in combination, the decrease rate of the operation index value and the state of the front suspension of the vehicle to improve the accuracy of determining whether or not the rider has intentionally decreased the brake operation amount to release the brake operation or whether or not an inconsistency has occurred between the brake operation amount detection value and the rider operation, whereby it is possible to more appropriately perform the brake assist according to the actual brake operation of the rider.

### (Item 15)

The brake device according to any one of items 7 to 14, characterized by further comprising an operation detection unit (e.g. 8) that detects an operation index value varying according to a brake operation amount of a driver,
wherein the control unit releases the brake assist by the assist mechanism in a case where the behavior detection unit detects, as the state of suspension, that a stroke speed of a rear suspension of the vehicle when the rear suspension contracts falls below a predetermined value and the operation index value detected by the operation detection unit is less than a threshold during execution of the brake assist by the assist mechanism.

According to this item, it is possible to use, in combination, the decrease rate of the operation index value and the change in state of the rear suspension of the vehicle to improve the accuracy of determining whether or not the rider has intentionally decreased the brake operation amount to release the brake operation, whereby it is possible to more appropriately perform the brake assist according to the actual brake operation of the rider.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures and functions.

## Claims

1. A brake device (130) of a vehicle (100), **characterized by** comprising:
an assist mechanism (6) that performs brake assist for increasing a braking force of the vehicle;
a behavior detection unit (121, 123, 125) that detects a pitching behavior of the vehicle; and
a control unit (7) that controls the brake assist by the assist mechanism according to the pitching behavior detected by the behavior detection unit.

2. The brake device according to claim 1, **characterized by** further comprising an operation detection unit (8) that detects an operation index value varying according to a brake operation amount of a driver,
wherein the control unit controls the brake assist by the assist mechanism according also to a change in the operation index value detected by the operation detection unit.

3. The brake device according to claim 2, **characterized in that** the control unit executes the brake assist by the assist mechanism in a case where the operation detection unit detects an increase rate of the operation index value larger than a predetermined value and the behavior detection unit detects a first pitching behavior in which a pitching amount of the vehicle becomes larger than a predetermined amount.

4. The brake device according to claim 3, **characterized in that** the first pitching behavior is a behavior in which the front of the vehicle pitches downward.

5. The brake device according to any one of claims 2 to 4, **characterized in that** the control unit decreases an assist amount of the brake assist in a case where the operation detection unit detects a decrease rate of the operation index value larger than a predetermined value and the behavior detection unit detects a second pitching behavior in which a pitching amount of the vehicle becomes larger than a predetermined amount during execution of the brake assist by the assist mechanism.

6. The brake device according to claim 5, **characterized in that** the second pitching behavior is a behavior in which the front of the vehicle pitches upward.

7. The brake device according to any one of claims 2 to 6, **characterized in that** the behavior detection unit detects the pitching behavior by detecting a state of suspension of the vehicle.

8. The brake device according to claim 7, **characterized in that** the control unit executes the brake assist by the assist mechanism in a case where the behavior detection unit detects, as the state of suspension, that a front suspension of the vehicle contracts by a stroke amount larger than a predetermined amount in a state where the operation index value larger than a predetermined value is input.

9. The brake device according to claim 7 or 8, **characterized in that** the control unit executes the brake assist by the assist mechanism in a case where the behavior detection unit detects, as the state of suspension, that a rear suspension of the vehicle extends by a stroke amount larger than a predetermined amount in a state where the operation index value larger than a predetermined value is input.

10. The brake device according to any one of claims 7 to 9, **characterized in that** the control unit decreases an assist amount of the brake assist in a case where the behavior detection unit detects, as the state of suspension, that a front suspension of the vehicle extends with a stroke amount larger than a predetermined amount during execution of the brake assist by the assist mechanism.

11. The brake device according to any one of claims 7 to 10, **characterized in that** the control unit decreases an assist amount of the brake assist in a case where the behavior detection unit detects, as the state of suspension, that a rear suspension of the vehicle contracts more than a predetermined amount during execution of the brake assist by the assist mechanism.

12. The brake device according to any one of claims 7 to 11, **characterized in that** the control unit executes assist of the brake assist in a case where the behavior detection unit detects, as the state of suspension, that a suspension of the vehicle changes at a stroke speed higher than a predetermined value.

13. The brake device according to any one of claims 7 to 12, **characterized in that** the control unit decreases an assist amount of the brake assist in a case where the behavior detection unit detects, as the state of suspension, that a suspension of the vehicle changes at a stroke speed higher than a predetermined value during execution of the brake assist by the assist mechanism.

14. The brake device according to any one of claims 7 to 13, **characterized by** further comprising an operation detection unit (8) that detects an operation index value varying according to a brake operation amount of a driver,
wherein the control unit releases the brake assist by the assist mechanism in a case where the behavior detection unit detects, as the state of suspension, that a stroke speed of a front suspension of the vehicle when the front suspension extends falls below a predetermined value and the operation index value detected by the operation detection unit is less than a threshold during execution of the brake assist by the assist mechanism.

15. The brake device according to any one of claims 7 to 14, **characterized by** further comprising an operation detection unit (8) that detects an operation index value varying according to a brake operation amount of a driver,
wherein the control unit releases the brake assist by the assist mechanism in a case where the behavior detection unit detects, as the state of suspension, that a stroke speed of a rear suspension of the vehicle when the rear suspension contracts falls below a predetermined value and the operation index value detected by the operation detection unit is less than a threshold during execution of the brake assist by the assist mechanism.
